(19) Europäisches Patentamt
European Patent Office
Office européen des brevets

(11) EP 3 306 725 A1

(12) EUROPEAN PATENT APPLICATION

(43) Date of publication:
11.04.2018 Bulletin 2018/15

(21) Application number: 17185043.1

(22) Date of filing: 07.08.2017

(51) Int Cl.:
H01M 8/0662 (2016.01)          B01D 53/32 (2006.01)
H01M 8/242 (2016.01)            H01M 8/023 (2016.01)
H01M 8/0245 (2016.01)          H01M 8/0271 (2016.01)
H01M 8/04089 (2016.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 07.10.2016 JP 2016198956

(71) Applicant: Panasonic Intellectual Property
Management Co., Ltd.
Osaka-shi, Osaka 540-6207 (JP)

(72) Inventors:
• YAKUMARU, Yuuichi
Osaka-shi, Osaka 540-6207 (JP)
• UKAI, Kunihiro
Osaka-shi, Osaka 540-6207 (JP)

(74) Representative: Grünecker Patent- und
Rechtsanwälte
PartG mbB
Leopoldstraße 4
80802 München (DE)

(54) GAS DIFFUSION LAYER AND ELECTROCHEMICAL HYDROGEN PUMP

(57) A gas diffusion (2A) layer includes sheet materials (22) laminated to each other and each having a gas diffusion portion (24) in which through-holes (21) are provided to allow a gas to pass therethrough, and a manifold hole (25) which is provided in a region other than that of the gas diffusion portion (24) and through which the gas passes.

FIG. 1

**Description**

BACKGROUND

1. Technical Field

The present disclosure relates to a gas diffusion layer and an electrochemical hydrogen pump.

2. Description of the Related Art

In recent years, in consideration of environmental issues, such as global warming, and energy issues, such as depletion of petroleum resources, as a clean alternative energy source instead of fossil fuels, attention has been paid on a hydrogen gas. When a hydrogen gas is combusted, water is only emitted, and carbon dioxide, nitrogen oxide, and the like, each of which causes global warming, are not emitted; hence, a hydrogen gas is expected as clean energy. As a device using a hydrogen gas as a fuel, for example, fuel cells may be mentioned, and for automobile power sources and household power generation, fuel cells have been increasingly developed and also have been spread. In addition, in a coming hydrogen society, besides a technique of manufacturing a hydrogen gas, technical development in terms of storage of a hydrogen gas at a high density, transportation of a small volume of hydrogen at a low cost, and usage thereof has been required. Furthermore, in order to promote the spread of fuel cells, infrastructure of fuel supply is also required to be organized. Accordingly, various proposals have been made for purification to obtain a high purity hydrogen gas and for pressure rising thereof.

For example, Japanese Patent No. 4733380 has disclosed that as shown in Fig. 12, a support member 30 for an electrolyte membrane of a high differential pressure electrochemical cell is used as a gas diffusion layer which is in contact with the electrolyte membrane. That is, in one surface of the support member 30, a plurality of rectangular recess portions is formed, and in the other surface, a plurality of rhombic recess portions is formed. In addition, an overlapping portion of the two types of recess portions forms a triangle through-hole 31 through which a fluid passes. Accordingly, clogging of a fluid flow path which may occur in a related mesh type gas diffusion layer may be suppressed, and in addition, a rigidity can be secured which can withstand the difference in pressure between a high pressure side and a low pressure side of the electrochemical cell. Accordingly, since being supported by the support member 30, the electrolyte membrane can be suppressed from being deformed to a point of rupture.

SUMMARY

However, Japanese Patent No. 4733380 has not described a manifold which supplies a gas from the outside, and hence, from this document, the way of supplying a gas to the support member 30 has not been known.

In consideration of the situation described above, one non-limiting and exemplary embodiment provides a gas diffusion layer including sheet materials in each of which a manifold hole for supplying a gas to a gas diffusion portion is provided.

In one general aspect, the techniques disclosed here feature a gas diffusion layer comprising: sheet materials laminated to each other and each of which include a gas diffusion portion having through-holes through which a gas passes and a manifold hole which is provided in a region other than that of the gas diffusion portion and through which the gas passes.

According to one aspect of the present disclosure, a gas diffusion layer including sheet materials in each of which a manifold hole for supplying a gas to a gas diffusion portion is provided can be obtained.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is a view showing one example of a sheet material of a gas diffusion layer of a first embodiment;
Fig. 2A is a view showing one example of a gas diffusion layer of a second embodiment;
Fig. 2B is a view showing one example of the gas diffusion layer of the second embodiment;
Fig. 3A is a view showing one example of the gas diffusion layer of the second embodiment;
Fig. 3B is a view showing one example of the gas diffusion layer of the second embodiment;

Fig. 4A is a view showing one example of a gas diffusion layer of a third embodiment;
Fig. 4B is a view showing one example of a gas diffusion layer of a modified example of the third embodiment;
Fig. 5A is a view showing one example of a sheet material of the gas diffusion layer of the third embodiment;
Fig. 5B is a view showing one example of the sheet material of the gas diffusion layer of the third embodiment;
Fig. 5C is a view showing one example of the sheet material of the gas diffusion layer of the third embodiment;
Fig. 6 is a view showing one example of a gas diffusion layer of a first example of the third embodiment;
Fig. 7 is a view showing one example of a gas diffusion layer of a third example of the third embodiment;
Fig. 8 is a view showing one example of a gas diffusion layer of a fourth example of the third embodiment;
Fig. 9 is a view showing one example of an electrochemical hydrogen pump of a fourth embodiment;
Fig. 10 is a view showing one example of the electrochemical hydrogen pump of the fourth embodiment;

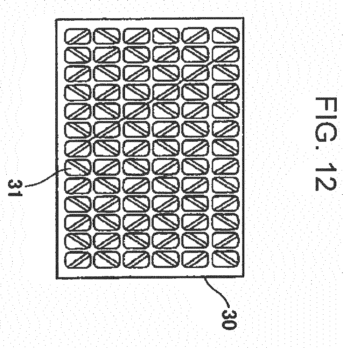

Fig. 11 is a view showing one example of a gas diffusion layer of an electrochemical hydrogen pump of an example of the fourth embodiment; and Fig. 12 is a view showing one example of a related gas diffusion layer.

DETAILED DESCRIPTION

(First Embodiment)

For example, in an electrochemical hydrogen pump to obtain a high pressure hydrogen gas, in order to prevent a gas to be supplied to a solid molecular membrane (electrolyte membrane) from leaking to the outside, gaskets or the like are provided at two sides of a membrane electrode assembly (hereinafter referred to as "MEA") (electrolyte membrane-gas diffusion layer-catalyst layer) and are then integrally assembled with the MEA in advance. Electrically conductive separator plates are disposed outside the MEA's in order to mechanically fix the MEA's and to electrically connect between adjacent MEA's in series. In a portion of the separator plate in contact with the gas diffusion layer of the MEA, a gas flow path which supplies a gas to the MEA and carries out an excess gas from the MEA is formed. Although this gas flow path may be formed separately from the separator plate, a groove-shaped gas flow path is generally formed in a surface layer of the separator plate.

In this case, for example, when the MEA's and the separator plates are alternately overlapped with and laminated to each other, in order to supply an appropriate amount of a gas to the gas flow path of each separator plate, the separator plates are required to be formed so that fluid paths are branched from an appropriate conduit path, and front ends of the branched fluid paths are connected to the gas flow paths of the separator plates. The conduit path as described above is called a manifold.

Accordingly, a gas diffusion layer of a first aspect of the present disclosure comprises sheet materials laminated to each other and each including a gas diffusion portion in which through-holes are provided to allow a gas to pass therethrough, and at least one manifold hole which is provided in a region other than that of the gas diffusion portion and through which the gas passes.

As described above, since the gas diffusion layer of the MEA is formed of a laminate of the sheet materials, and since the manifold holes are provided in appropriate positions of the sheet materials, for example, when the MEA's and the separator plates are alternately overlapped with and laminated to each other, a gas supply to the separator plates is appropriately performed. That is, when the MEA's and the separator plates are alternately overlapped with and laminated to each other, the gas diffusion portion of the sheet material and the gas flow path of the separator plate are disposed to face each other, and the manifold hole of the sheet material and a manifold hole of the separator plate are disposed to face each other, so that the manifold can be easily formed. Accordingly, the gas flow path of each separator plate communicates with the manifold, an appropriate amount of a gas can be supplied to the gas flow path of the separator plate.

Hereinafter, with reference to the attached drawings, a particular example of the first embodiment will be described.

The following particular example shows one example of the first embodiment. Hence, as long as the numerical value, the shape, the material, the constituent element, the arrangement position of the constituent element, the connection mode thereof, and the like described below are not described in the claims, the first embodiment is not limited thereto (the same thing can also be said for the other embodiments). In addition, among the following constituent elements, a constituent element not described in the independent claim showing a topmost concept will be described as an arbitrary constituent element. In addition, in the drawings, description of an element designated by the same reference numeral may be omitted in some cases. In addition, in order to facilitate the understanding of the drawings, the constituent elements are schematically drawn, and hence, the shape, the dimensional ratio, and the like may be not accurate in some cases.

[Device Structure]

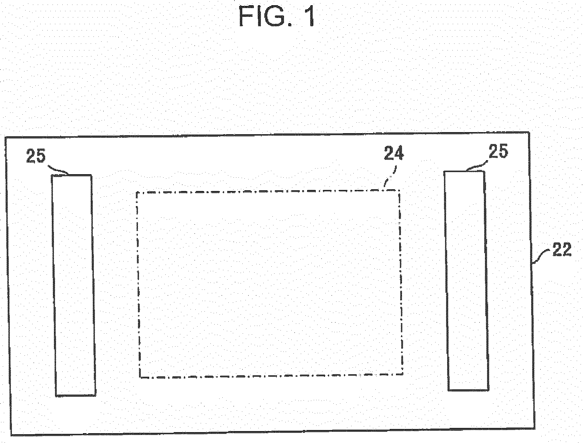

Fig. 1 is a view showing one example of a sheet material of a gas diffusion layer of the first embodiment.

In the example shown in Fig. 1, a sheet material 22 includes a gas diffusion portion 24 and manifold holes 25.

In the gas diffusion portion 24, through-holes through which a gas passes are provided. One example of the structure of the gas diffusion portion 24 will be described in a third embodiment. The manifold holes 25 are each provided in a region other than that of the gas diffusion portion 24 and are each an opening through which a gas passes. As long as being the opening as described above, the manifold hole 25 may have any shape. For example, in Fig. 1, although having a rectangular shape, the manifold hole 25 may have a round shape. In addition, in Fig. 1, although the manifold holes 25 are provided at the two sides of the gas diffusion portion 24, the arrangement is not limited thereto.

In this embodiment, the gas diffusion layer includes a plurality of sheet materials 22. In addition, the sheet materials 22 are laminated to each other. For example, the sheet materials 22 may be integrally bonded to each other by welding, adhesion, brazing, or the like. Main surfaces of the sheet materials in a laminated state may be surface-bonded to each other by diffusion bonding or the like. In this case, sealing of the manifold hole 25 at the bonding surface of the sheet material 22 is no required. One example of the structure of the gas diffusion layer will be described in a second embodiment.

As described above, since the gas diffusion layer of the MEA is formed by the laminate of the sheet materials 22, and the manifold holes 25 are provided in the sheet materials 22 at appropriate positions, for example, when the MEA's and the separator plates are alternately overlapped with and laminated to each other, a gas supply to the separator plates is appropriately performed. That is, when the MEA's and the separator plates are alternately overlapped with and laminated to each other, the gas diffusion portions 24 of the sheet materials 22 and the gas flow paths of the separator plates are disposed to face each other, and the manifold holes 25 of the sheet materials 22 and the manifold holes of the separator plates are disposed to face each other, so that the manifold can be easily formed. Accordingly, since the gas flow paths of the separator plates communicate with the manifold, an appropriate amount of a gas from the manifold can be supplied to the gas flow paths of the separator plates.

(Second Embodiment)

As described above, the gas diffusion layer of the first embodiment is formed of the laminate of the sheet materials having the manifold holes.

In this case, fine through-holes are provided in the gas diffusion portion of the sheet material, and when the sheet materials are laminated to each other, in order to suppress the displacement between the through-holes of the gas diffusion portions, the sheet materials (gas diffusion portions) are required to be aligned with each other at a high accuracy. Hence, a device (alignment portion) performing a highly accurate alignment is necessarily provided at an appropriate position of the sheet material. In addition, in order to prevent a gas in the gas diffusion portion from leaking to the outside, a sealing portion is required to be provided at an appropriate position of the sheet material.

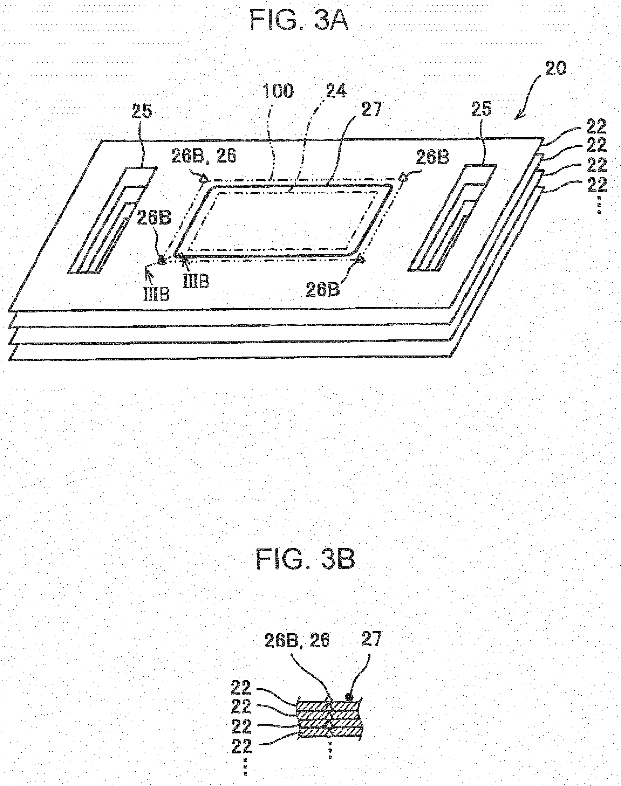

Accordingly, intensive research how to provide the alignment portion, the sealing portion, and the manifold hole in the sheet material was carried out, and as a result, the following knowledge was obtained. In addition, in the following description, as the alignment portion, although an alignment hole will be described by way of example, the alignment portion is not limited thereto (for example, see Figs. 3A and 3B).

First, the positional relationship among the alignment portion, the sealing portion, and the manifold hole was investigated.

The alignment hole is required to be provided outside a region surrounded by the sealing portion. The reason for this is that when the alignment hole is provided in the region surrounded by the sealing portion, the alignment hole may function as a gas leak path in some cases.

According to a gas diffusion layer of a second aspect of the present disclosure, in the gas diffusion layer of the first aspect, the sheet materials may further include a sealing portion provided in a region not surrounding the manifold hole and outside the periphery of the gas diffusion portion and at least one alignment portion which aligns adjacent sheet materials with each other, and the at least one alignment portion may be provided outside the sealing portion.

In addition, in a region defined by an imaginary line drawn in parallel to the sealing portion so as to pass through the alignment hole, in order to exclude factors generating stress concentration as much as possible when an exterior force is applied to the sheet material, any process may be not performed on the sheet material other than the gas diffusion portion. The reason for this will be described below,

For example, before and after the alignment of the sheet materials is performed, when an alignment pin is inserted into and withdrawn from the alignment holes, an exterior force may be applied to the sheet materials in some cases. In this case, when the hole is provided in a part of a sheet material having a uniform cross-section, the stress is increased (stress concentration) as compared to that in the other part. Hence, in this case, in-plane variation in strain of the sheet material is generated by the stress concentration. As a result, if the manifold hole is present in the region defined by the imaginary line, compared to the case in which the manifold hole is present outside the region described above, the in-plane variation in strain of the sheet material is generated at a side close to the gas diffusion portion, and hence, it is believed that the gas diffusion portion is seriously adversely influenced. For example, by the in-plane variation in strain of the sheet material, displacement of the through-holes of the gas diffusion portion may arise in some cases.

In addition, fine flashes generated when the manifold hole is formed in the sheet material are also required to be taken into consideration. That is, when the manifold hole is present in the region defined by the imaginary line, compared to the case in which the manifold hole is present outside the region described above, the fine flashes described above are generated at a side close to the gas diffusion portion, and hence, it is believed that the gas diffusion portion is seriously adversely influenced. For example, by the fine flashes of the manifold hole, a desired horizontal level of the gas diffusion portion of the sheet material may be difficult to maintain in some cases.

That is, a gas diffusion layer of a third aspect of the present disclosure was devised by the knowledge described above. In the gas diffusion layer of the second aspect, the sheet materials may further include a sealing portion provided in a region not surrounding the manifold hole and outside the periphery of the gas diffusion portion and at least one alignment portion which aligns adjacent sheet materials with each other, and the at least one alignment portion may be provided between the sealing portion and the manifold hole.

Next, an optimum positional relationship between the alignment hole and the sealing portion was investigated.

When the alignment hole is formed as close as possible to the gas diffusion portion, since the distance between the alignment hole and the gas diffusion portion can be minimized, influence factors of the strain generated between the alignment hole and the gas diffusion portion can be reduced. As a result, the displacement of the through-holes of the gas diffusion portion can be appropriately suppressed.

That is, the alignment hole may be formed in the vicinity of the periphery of the sealing portion so as to be as close as possible to the gas diffusion portion.

That is, a gas diffusion layer of a fourth aspect of the present disclosure was devised based on the knowledge described above, and in the gas diffusion layer of the third aspect, the at least one alignment portion may be provided at a side closer to the sealing portion than to the manifold hole. In addition, according a gas diffusion layer of a fifth aspect of the present disclosure, in the gas diffusion layer of the fourth aspect, the at least one alignment portion may be provided around the periphery of the sealing portion.

Furthermore, according to a gas diffusion layer of a sixth aspect of the present disclosure, in the gas diffusion layer of any one of the second to the fifth aspects, the number of the at least one alignment portion may be two or more, and the alignment portions may be provided at positions which face each other with the gas diffusion portion interposed therebetween.

According to the structure as described above, for example, when an alignment pin is inserted into and withdrawn from the alignment holes, since an exterior force working on the sheet material is uniformly applied to the plane of the sheet material, compared to the case in which alignment portions are not provided at positions facing each other with the gas diffusion portion interposed therebetween, the in-plane variation in stress distribution of the sheet material can be suppressed.

As described above, according to the gas diffusion layer of this aspect, when the sheet materials are laminated to each other, in order to suppress the displacement between the through-holes of the gas diffusion portions, the sheet materials can be aligned at a high accurate.

[Device Structure]

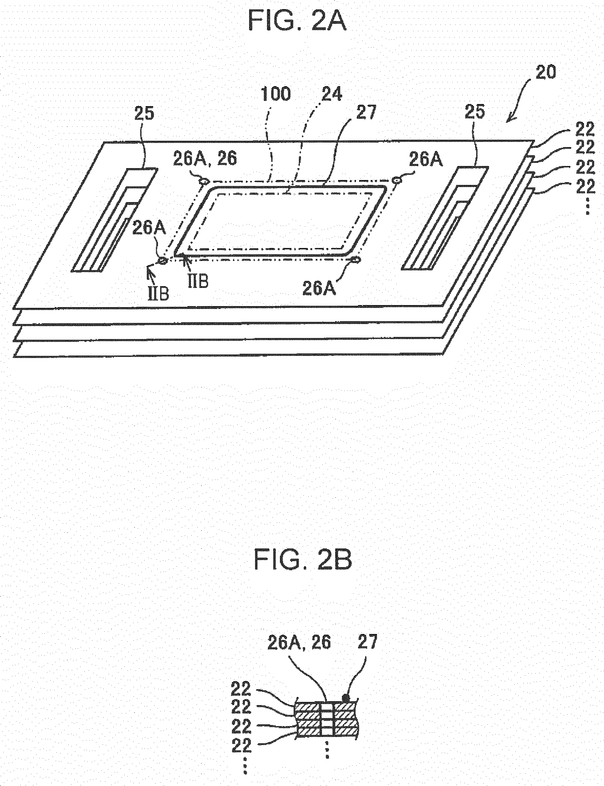

Figs. 2A, 2B, 3A, and 3B are views each showing one example of the gas diffusion layer of the second embodiment. Fig. 2B is a cross-sectional view of a gas diffusion layer 20 of Fig. 2A taken along the line IIB-IIB. Fig. 3B is a cross-sectional view of a gas diffusion layer 20 of Fig. 3A taken along the line IIIB-IIIB.

As shown in Figs. 2A and 3A, the gas diffusion layer 20 includes sheet materials 22. In addition, in Figs. 2A and 3A, although the sheet materials 22 are drawn so as to be separated from each other for the convenience, as described above, those sheet materials 22 are integrally bonded to each other by welding, adhesion, brazing, or the like.

The sheet material 22 includes a sealing portion 27. The sealing portion 27 is provided in a region not surrounding a manifold hole 25 and outside the periphery of a gas diffusion portion 24 of the sheet material 22. In particular, as shown in Figs. 2A and 3A, the sealing portion 27 is provided for the topmost sheet material 22. Accordingly, the gas diffusion layer 20 is formed so as not to allow a gas in the gas diffusion portion 24 to leak to the outside. In addition, because of the integral bonding between the sheet materials 22, the sealing portion 27 is not required to be provided for bonding portions between sheet materials 22 located at a lower side.

The sealing portion 27 may have any structure as long as the gas diffusion portion 24 is sealed so as not to allow a gas therein to leak to the outside. As the sealing portion 27, for example, an O ring may be mentioned by way of example. In addition, an outer circumference shape of the sealing portion 27 surrounding the gas diffusion portion 24 may be either rectangular or round.

The sheet materials 22 each include at least one alignment portion 26. The alignment portion 26 functions to align adjacent sheet materials 22 with each other. The alignment portion 26 may have any structure as long as adjacent sheet materials 22 can be aligned with each other. As the alignment portion 26, an alignment hole 26A shown in Figs. 2A and 2B or an alignment protrusion 26B shown in Figs. 3A and 3B may be used.

In this case, the alignment portion 26 is required to be provided in a region other than that surrounded by the sealing portion 27. The reason for this is that when the alignment portion 26 is provided in the region surrounded by the sealing portion 27, the alignment portion 26 may function as a gas leak path in some cases.

In addition, the alignment portion 26 is provided between the sealing portion 27 and the manifold hole 25. In this example, the alignment portion 26 is provided around the periphery of the sealing portion 27. In particular, four alignment portions 26 are provided in the vicinities of four corners of a rectangular sealing portion 27. The reason for this is as follows.

For example, before and after the alignment of the sheet materials 22 is performed, when an alignment pin is inserted into or withdrawn from the alignment holes 26A, an exterior force may be applied to the sheet materials 22 in some cases. In this case, when the hole is formed in a part of the sheet material 22 having a uniform cross-section, the stress is increased as compared to that in the other part (stress concentration). Accordingly, in this case, the in-plane variation in strain of the sheet material 22 is generated by the stress concentration. Hence, if the manifold hole is present in a region defined by an imaginary line 100 obtained by connection between the alignment holes 26A, compared to the case in which the manifold hole 25 is present outside the region described above, the in-plane variation in strain of the sheet materials 22 occurs at a side close to the gas diffusion portion 24, and as a result, it is believed that the gas diffusion portion 24 is seriously adversely influenced. For example, by the in-plane variation in strain of the sheet material 22, displacement of the through-holes of the gas diffusion portion 24 may occur in some cases.

In addition, fine flashes generated when the manifold hole 25 is formed in the sheet material 22 are also required to be taken into consideration. That is, if the manifold hole is present in the region defined by the imaginary line 100, compared to the case in which the manifold hole 25 is present outside the region described above, since the above fine flashes are generated at a side close to the gas diffusion portion 24, it is believed that the gas diffusion portion 24 is seriously adversely influenced. For example, by the fine flashes of the manifold hole 25, a desired horizontal level of the gas diffusion portion 24 of the sheet material 22 may be difficult to maintain in some cases.

Furthermore, when the alignment portion 26 is placed as close as possible to the gas diffusion portion 24, since the distance between the alignment portion 26 and the gas diffusion portion 24 can be minimized, influence factors of the strain generated between the alignment portion 26 and the gas diffusion portion 24 can be reduced. As a result, the displacement of the through-holes of the gas diffusion portion 24 can be appropriately suppressed.

That is, the alignment portion 26 may be provided in the vicinity of the periphery of the sealing portion 27 so as to be as close as possible to the gas diffusion portion 24.

In addition, the sheet material 22 has a plurality of alignment portions 26, and the alignment portions 26 are disposed at positions facing each other with the gas diffusion portion 24 interposed therebetween. In particular, in a plan view of the gas diffusion portion 24, when an X axis and a Y axis are drawn through the center of the gas diffusion portion 24 so as to be orthogonal to each other, an alignment portion 26 present in the first quadrant and an alignment portion 26 present in the third quadrant are located at opposite positions with respect to the center described above. An alignment portion 26 present in the second quadrant and an alignment portion 26 present in the fourth quadrant are located at opposite positions with respect to the center described above.

As described above, for example, when an alignment pin is inserted into or withdrawn from the alignment holes 26A, since an external force working on the sheet material 22 is uniformly applied to the plane thereof, compared to the case in which the alignment portions 26 are not provided at positions facing each other with the gas diffusion portion 24 interposed therebetween, the in-plane variation in stress distribution of the sheet material 22 can be suppressed.

As described above, in the gas diffusion layer 20 of this embodiment, when the sheet materials 22 are laminated to each other, in order to suppress the displacement between the through-holes of the gas diffusion layer 20, the sheet materials 22 can be aligned with each other at a high accuracy.

In addition, except for the features described above, the gas diffusion layer 20 of this embodiment may be formed in a manner similar to that of the gas diffusion layer 20 of the first embodiment.

(Third Embodiment)

The probability that the diffusion of a gas flowing through a gas diffusion layer is non-uniformed has been intensively investigated, and the following knowledge was obtained.

When flow directions of a gas in a gas diffusion layer are parallel to each other in one direction as disclosed in Japanese Patent No. 4733380, the diffusion of a gas flowing through the gas diffusion layer may be non-uniformed in some cases.

For example, in the support member 30 disclosed in Japanese Patent No. 4733380, when the structure is formed so that a gas flows into the through-hole 31 of the support member 30 through a gas flow path of an appropriate flow path member, a gas is not allowed to flow into a through-holes 31 located above a vertical line to a portion at which no gas flow path of the flow path member is provided. Hence, in this case, the gas diffusion in the support member 30 is non-uniformed, and by the non-uniformity of the gas diffusion as described above, an increase in reaction overvoltage of an electrochemical cell, that is, an increase in consumption electric power, may occur in some cases.

Accordingly, in order to obtain a uniform gas diffusion in the gas diffusion layer as compared to that in the past, the present inventors finally found an idea to provide at least one communication path communicating between through-holes in the gas diffusion layer.

That is, according to a gas diffusion layer of a seventh aspect of the present disclosure, in any one of the gas diffusion layers of the first to the sixth aspects, at least one of the sheet materials may include a communication path communicating between through-holes of a sheet material adjacent thereto, the through-holes thereof being apart from the other through-holes and not communicated with each other.

According to the structure described above, as the gas diffusion layer of this aspect, a gas diffusion layer in which the gas diffusivity is taken into consideration as compared to that in the past can be obtained. That is, since the sheet material of the gas diffusion layer has a communication path, a gas passing into the gas diffusion layer from an appropriate flow path member can be supplied not only in one direction but also in an arbitrary direction. Accordingly, when sheet materials having different arrangement patterns of the communication paths are laminated to each other, the direction of a gas flow in the gas diffusion layer can be arbitrarily set. As a result, the gas diffusivity in the gas diffusion layer is improved.

In addition, for example, when the structure in which a gas is allowed to flow into a through-hole of a gas diffusion layer through a gas flow path of an appropriate flow path member is used, if the sheet material has no communication path described above, a gas is not allowed to flow into a through-hole of the gas diffusion layer located above the vertical line to the portion at which no gas flow path of the flow path member is provided, and the gas diffusion in the gas diffusion layer may be non-uniformed in some cases. However, in the gas diffusion layer of this aspect, through the communication path described above, since a gas is also allowed to flow into the through-hole of the gas diffusion layer as described above, the gas diffusion can be suppressed from being non-uniformed.

In addition, according to a gas diffusion layer of an eighth aspect of the present disclosure, in the gas diffusion layer of the seventh aspect of the present disclosure, one of the sheet materials which are located most outside may have a small number of the communication paths as compared to that of each of the other sheet materials. One of the sheet materials which are located most outside contacts a catalyst layer.

According to the structure described above, the uniformity of the gas diffusion is improved. Since the shape of the through-hole is different from that of the communication path, the open areas thereof are also different from each other. When the open area of the through-hole is different from that of the communication path, the fluid resistances thereof are different from each other, and the degrees of easiness of gas flow are also different from each other, so that the gas diffusion may be non-uniformed thereby. However, when the number of the communication paths is decreased, a gas may be more uniformly supplied from the outermost sheet material to the entire region of the catalyst layer in contact therewith.

In addition, according to a gas diffusion layer of a ninth aspect of the present disclosure, in the gas diffusion layer of any one of the first to the eighth aspects of the present disclosure, among the sheet materials, adjacent sheet materials may be adhered to each other.

According to the structure described above, even under the conditions in which a high pressure is applied to the gas diffusion layer, the displacement between the sheet materials of the laminate is suppressed, and the probability of decreasing the gas diffusivity due to the displacement between the through-holes of adjacent sheet materials can be reduced.

In addition, according to a gas diffusion layer of a tenth aspect of the present disclosure, in the gas diffusion layer of the seventh or the eighth aspect of the present disclosure, the communication path may communicate between through-holes provided in the same sheet material which is adjacent to the sheet material in which the communication path is provided.

According to the structure described above, compared to the case in which no communication path is provided in the adjacent sheet material, a gas can be uniformly diffused.

In addition, according to a gas diffusion layer of an eleventh aspect of the present disclosure, in the gas diffusion layer of any one of the seventh, the eighth, and the tenth aspects of the present disclosure, the communication path may communicate between through-holes provided in different sheet materials adjacent to the sheet material in which the communication path is provided.

According to the structure described above, compared to the case in which no communication path is provided in the adjacent sheet material, a gas can be uniformly diffused.

[Device Structure]

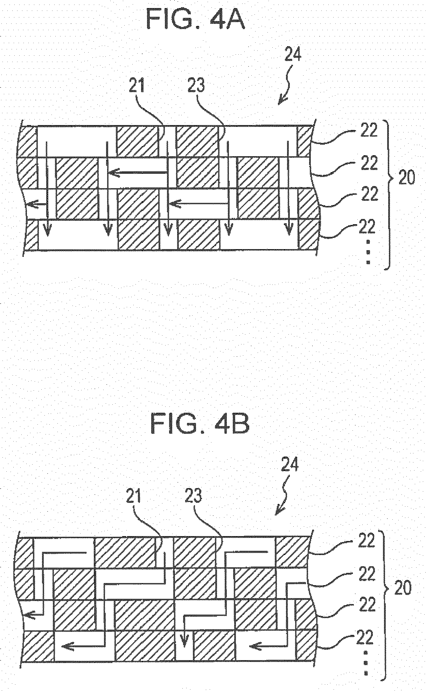

Fig. 4A is a view showing one example of a cross-section of the gas diffusion layer of the third embodiment. In Fig. 4A, a cross-section of the gas diffusion portion 24 of the gas diffusion layer 20 is shown.

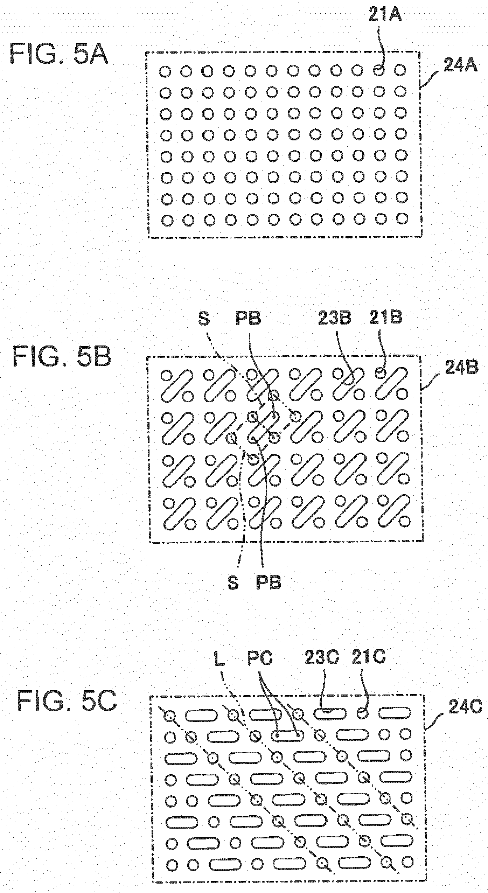

Figs. 5A, 5B, and 5C are views each showing one example of the sheet material of the gas diffusion layer of the first embodiment. In Figs. 5A, 5B, and 5C, a plan view of the gas diffusion portion 24 of the sheet material 22 is shown.

As shown in Fig. 4A, the gas diffusion layer 20 includes sheet materials 22 each having through-holes 21 through which a gas passes. The through-hole 21 is separated from the other through-holes 21 in the same sheet material 22 so as not to communicate therewith. In addition, at least one sheet material 22 of the gas diffusion layer 20 includes a communication path 23 communicating between through-holes 21 provided in the same sheet material 22 which are separated from the other through-holes 21 and which are not communicated with each other. As long as the gas diffusion layer 20 includes the sheet materials 22 each having the through-holes 21, and at least one sheet material 22 of the gas diffusion layer 20 includes the communication path 23 communicating between the through-holes 21, any structure may be used.

According to the example shown in Fig. 4A, in the gas diffusion layer 20, the through-holes 21 and pairs of end portions of the communication paths 23 collectively form a gas flow path (hereinafter, referred to as the "standard gas flow path") extending in a direction penetrating the gas diffusion layer 20, and the communication path 23 forms a gas flow path which is branched from the standard gas flow path and which extends in a direction parallel to the main surface of the gas diffusion layer 20 to an adjacent standard gas flow path. Accordingly, in a sheet material 22 adjacent to the sheet material 22 in which the communication path 23 is provided, the communication path 23 communicates between the through-holes 21which are separated from the other through-holes 21 and which are not communicated with each other. In addition, another example of the gas diffusion layer 20 will be described in a modified example.

When the gas diffusion layer 20 is viewed in plan, for example, as shown in Fig. 5A, in a metal-plate gas diffusion portion 24a forming the sheet material 22 of the gas diffusion layer 20, through-holes 21A may be formed at regular pitches in a longitudinal direction and a lateral direction to have a matrix shape (lattice shape). The through-hole 21A may have any shape. The through-hole 21A may be, for example, a round hole having a diameter of approximately several tens of micrometers (such as approximately 50 $\mu$m). As a material of the metal plate, although for example, stainless steel, titanium, or the like may be used, the material is not limited thereto. In addition, the metal plate of Fig. 5A does not include the communication path described above. Fig. 5A is a plan view obtained when one main surface of a metal sheet forming the gas diffusion portion 24A is viewed in plan.

In addition, as shown in Fig. 5B, in a metal-plate gas diffusion portion 24B forming the sheet material 22 of the gas diffusion layer 20, through-holes 21 B may be formed at regular pitches in a longitudinal direction and a lateral direction. The through-hole 21 B may have any structure. The through-hole 21 B may be, for example, a round hole having a diameter of approximately several tens of micrometers (such as approximately 50 $\mu$m). As a material of the metal plate, although for example, stainless steel, titanium, or the like may be used, the material is not limited thereto. Fig. 5B is a plan view obtained when one main surface of a metal sheet forming the gas diffusion portion 24B is viewed in plan.

In the example shown in Fig. 5B, when the centers of adjacent through-holes 21 B are connected to each other, the through-holes 21 B are arranged in a longitudinal direction and a lateral direction so as to form a rhombus S shown by a two-dot chain line. In this example, a communication path 23B is formed so as to have an opening along an oblique line formed between centers PB of adjacent rhombuses S. In addition, it may be said that the communication path 23B extends in a direction parallel to a first direction in which the through-holes 21B are connected to each other without intersecting the communication path 23B. In addition, it may also be said that the communication path 23B is formed so as to have an opening along the centers (PB) of straight lines between adjacent through-holes 21 B having a longer distance (between adjacent through-holes 21 B arranged in a longitudinal direction and a lateral direction) among the through-holes 21 B adjacent in a direction different from the first direction. In addition, for example, when the gas diffusion portion 24B and the gas diffusion portion 24A are laminated to each other, the through-holes 21 B and the communication paths 23B are arranged so that the through-holes 21A and the through-holes 21B are overlapped with each other, and so that the through-holes 21A are overlapped with the pairs of end portions of the communication paths 23B. Hence, in this case, the communication path 23B can communicate between the through-holes 21A.

The communication path 23B may have any shape. For example, when the through-hole 21 B is a round hole having a diameter of approximately several tens of micrometers (such as approximately 50 $\mu$m), the communication path 23B may be a slit having a width of approximately several tens of micrometers (such as approximately 50 $\mu$m).

In addition, as shown in Fig. 5C, in a metal-plate gas diffusion portion 24C forming the sheet material 22 of the gas diffusion layer 20, through-holes 21C may be formed. The through-holes 21C may have any shape. The through-hole 21C may be, for example, a round hole having a diameter of approximately several tens of micrometers (such as approximately 50 $\mu$m). As a material of the metal plate, although for example, stainless steel, titanium, or the like may be used, the material is not limited thereto. Fig. 5C is a plan view obtained when one main surface of a metal sheet forming the gas diffusion portion 24C is viewed in plan.

In the example shown in Fig. 5C, the through-holes 21C are arranged in a longitudinal direction and a lateral direction so that when the centers of adjacent through-holes 21C are connected to each other without intersecting communication paths 23C, an oblique straight line L shown by a two-dot chain line is formed. In this example, the communication path 23C is formed so as to have an opening along a line between two intermediate points PC which are obtained by equally dividing a straight line between adjacent through-holes 21C in a lateral direction. In addition, for example, when the gas diffusion portion 24A and the gas diffusion portion 24C are laminated to each other, the through-holes 21C and the communication paths 23C are arranged so that the through-holes 21A and the through-holes 21C are overlapped with each other, and so that the through-holes 21A are also overlapped with the pairs of end portions of the communication paths 23C. Hence, in this case, the communication path 23C can communicate between the through-holes 21A.

The communication path 23C may have any shape. For example, when the through-hole 21C is a round hole having a diameter of approximately several tens of micrometers (such as approximately 50 $\mu$m), the communication path 23C may be a slit having a width of approximately several tens of micrometers (such as approximately 50 $\mu$m).

Accordingly, the gas diffusion layer 20 of this embodiment can uniformly diffuse a gas as compared to that in the past. That is, since the gas diffusion layer 20 includes the communication paths 23, a gas passing in the gas diffusion layer 20 can be supplied not only in one direction but also in an arbitrary direction. As a result, when sheet materials 22 having different arrangement patterns of the communication paths 23 is laminated to form the gas diffusion layer 20, the direction of a gas flow in the gas diffusion layer 20 can be arbitrarily set. Hence, the gas diffusivity in the gas diffusion layer 20 is improved.

In addition, the combination between the sheet materials 22 having different arrangement patterns of the communication paths 23 is not particularly limited. For example, a metal plate having a different arrangement pattern from that of the gas diffusion portion 24C may be a metal plate in which the position of the communication path 23C is shifted in a lateral direction or a metal plate including the gas diffusion portion 24B.

In addition, for example, in the case in which a gas is allowed to flow into the through-hole 21 of the gas diffusion layer 20 through a gas flow path of a flow path member not shown in the figure, if the gas diffusion layer 20 does not include the communication path described above, a gas is not allowed to flow into the through-hole 21 of the gas diffusion layer 20 located above the vertical line to the portion at which no gas flow path of the flow path member is provided, and the gas diffusion in the gas diffusion layer 20 may be non-uniformed in some cases. However, in the gas diffusion layer 20 of this embodiment, since a gas can be allowed to flow into the through-hole 21 of the gas diffusion layer 20 through the communication path 23 as described above, the gas diffusion can be suppressed from being non-uniformed.

In addition, the gas diffusion portion 24B and the gas diffusion portion 24C shown in Figs. 5B and 5C, respectively, are configured as described below. First, the through-holes and the communication paths are provided in the same main surface of the sheet material. In addition, the open area of the through-hole and the open area of the communication path in the same main surface of the sheet material are different from each other. In particular, the open area of the communication path in the same main surface of the sheet material is larger than the open area of the through-hole. In addition, the number of the through-holes in the same main surface of the sheet material is different from that of the communication paths. In particular, the number of the through-holes in the same main surface of the sheet material is larger than that of the communication paths.

In addition, the gas diffusion layer 20 of this embodiment may be formed in a manner similar to that of the gas diffusion layer 20 of the first or the second embodiment except for the features described above.

In addition, the shapes and the dimensions of the through-hole 21 and the communication path 23 are described by way of example and are not limited to those shown in this example.

(Modified Example)

Fig. 4B is a view showing one example of a gas diffusion layer of a modified example of the first embodiment. Fig. 4B shows a cross-section of a gas diffusion portion 24 of a gas diffusion layer 20.

As shown in Fig. 4B, the gas diffusion layer 20 includes sheet materials 22 having through-holes 21 through which a gas passes. In addition, at least one sheet material 22 of the gas diffusion layer 20 includes a communication path 23 communicating between the through-holes 21.

In the example shown in Fig. 4B, in a gas flow path extending in a step wise manner (hereinafter, referred to as the "step-wise gas flow path"), through-holes 21 each forming a through path which extends in a direction penetrating the gas diffusion layer 20 and communication paths 23 communicating between the through paths of the step-wise gas flow path are provided in the gas diffusion layer 20. Accordingly, the communication path 23 communicates between the through-holes 21 of the sheet materials 22 adjacent to the sheet material 22 in which the communication path 23 is provided.

In addition, in a plan view of the gas diffusion layer 20, since the metal plate-made gas diffusion portion forming the sheet material 22 of the gas diffusion layer 20 is similar to that of the third embodiment, description thereof is omitted.

As described above, the gas diffusion layer 20 of this modified example can uniformly diffuse a gas as compared to that in the past. Since details of the effect and advantage of the gas diffusion layer 20 of this modified example are similar to those of the gas diffusion layer 20 of the third embodiment, description thereof is omitted.

The gas diffusion layer 20 of this modified example may be formed in a manner similar to that of the gas diffusion layer 20 of the third embodiment except for the features described above.

(First Example)

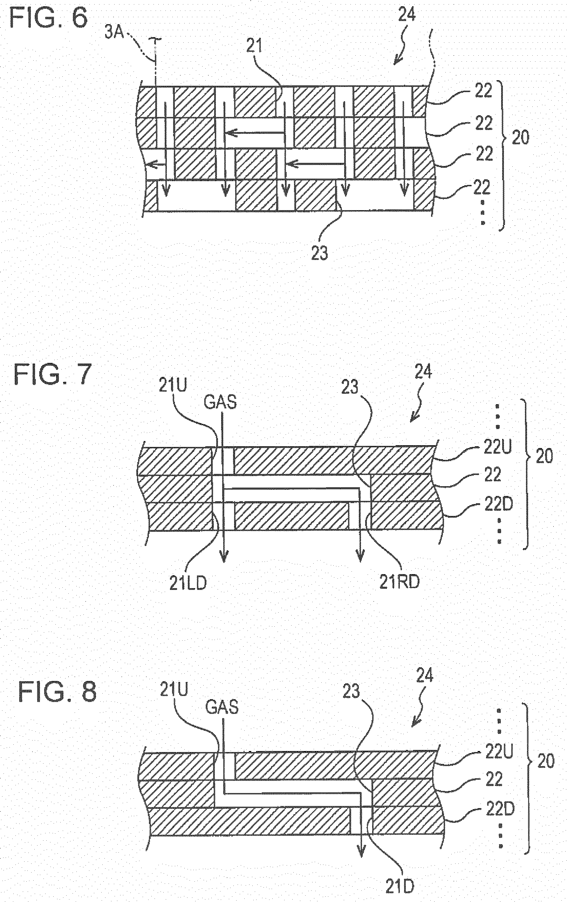

Fig. 6 is a view showing one example of a gas diffusion layer of a first example of the third embodiment. Fig. 6 shows a cross-section of a gas diffusion portion 24 of a gas diffusion layer 20.

According to the gas diffusion layer 20 of this example, in the gas diffusion layer 20 of the third embodiment or the modified example thereof, the number of communication paths of a sheet material 22 (hereinafter, referred to as the "contact sheet material 22" in some cases) of the gas diffusion layer 20 in contact with a catalyst layer 3A is smaller than that of each of the other layers. In addition, in Fig. 6, although an example in which the contact sheet material 22 is provided in the gas diffusion layer 20 of Fig. 4A is shown, the contact sheet material 22 as described above may also be provided in the gas diffusion layer 20 of Fig. 4B.

For example, a metal plate forming the contact sheet material 22 may be the metal plate of Fig. 5A including no communication paths but is not limited thereto. In addition, a metal sheet different from the contact sheet material 22 may be at least one of the gas diffusion portion 24B of Fig. 5B and the gas diffusion portion 24C of Fig. 5C but is not limited thereto. In addition, as shown in Figs. 5A to 5C, the area of a region in which no openings are formed is larger than the open area of the through-holes in the metal sheet. Hence, in the region of the main surface of the outermost sheet material of the gas diffusion layer which is in contact with the catalyst layer, the area in which no openings are formed is larger than the open area of the through-holes.

As the number of the communication paths 23 of the sheet material 22 of the gas diffusion layer 20 is decreased, a contact area between the anode catalyst layer 3A and the sheet material 22 is increased. Hence, the contact area between the contact sheet material 22 and the anode catalyst layer 3A is increased as compared to the case in which the anode catalyst layer 3A is in contact with another layer, and hence, a contact resistance between the contact sheet material 22 and the anode catalyst layer 3A can be decreased.

In addition, when the number of the communication paths 23 of the sheet material 22 of the gas diffusion layer 20 is increased, the variation in in-plane fluid resistance of this sheet material 22 tends to increase. For example, when a region including a large number of communication paths and a region including a smaller number of communication paths than that described above are simultaneously present in the surface of the sheet material 22, since the open area of the communication path 23 is larger than that of the through-hole 21, the fluid resistance of the former region is lower than that of the latter region. Accordingly, a gas is more easily allowed to flow in the former region than in the latter region. Hence, if a sheet material 22 having a large number of communication paths 23 is in contact with the catalyst layer 3A, a uniform supply of a gas over the entire region of the catalyst layer 3A from the gas diffusion layer 20 may be disturbed in some cases. However, in the gas diffusion layer 20 of this example, since the contact sheet material 22 having a small number of communication paths 23 is in contact with the anode catalyst layer 3A, the probability described above can be reduced.

The gas diffusion layer 20 of this example may be formed in a manner similar to that of the third embodiment or the modified example thereof except for the features described above.

(Second Example)

According to a gas diffusion layer 20 of this example, in the gas diffusion layer 20 of one of the first embodiment, the second embodiment, the third embodiment, the modified example of the third embodiment, and the first example of the third embodiment, adjacent sheet material 22 of the gas diffusion layer 20 are adhered to each other. For example, metal plates forming the adjacent sheet materials 22 are welded to each other by sintering, and hence the adjacent sheet materials 22 are appropriately adhered to each other.

The gas diffusion layer 20 of this example may be formed in a manner similar to that of one of the first embodiment, the second embodiment, the third embodiment, the modified example of the third embodiment, and the first example of the third embodiment except for the features described above.

(Third Example)

Fig. 7 is a view showing one example of a gas diffusion layer of a third example of the third embodiment.

According to a gas diffusion layer 20 of this example, in the gas diffusion layer 20 of one of the third embodiment, the modified example of the third embodiment, and the first example of the third embodiment, the communication path 23 communicates between a through-hole 21 LD and a through-hole 21 RD provided in the same sheet material 22D adjacent to the sheet material 22 in which the communication path 23 is provided. That is, the communication path 23 communicates between the left through-hole 21 LD and the right through-hole 21 RD present in the same sheet material 22D located under the sheet material 22 in which the communication path 23 is provided. In addition, the through-hole 21 LD and the through-hole 21 RD are shifted from each other by the length of the communication path 23 in a direction parallel to the main surface of the gas diffusion layer 20.

In addition, as shown in Fig. 7, a sheet material 22U provided on the sheet material 22 in which the communication path 23 is provided may include a through-hole 21U right above the through-hole 21 LD. In this case, the communication path 23 communicates between the through-hole 21 U and the through-hole 21RD. In addition, the sheet material 22U located on the sheet material 22 in which the communication path 23 is provided may include a through-hole (not shown) located right above the through-hole 21 RD. In this case, the communication path 23 communicates between the through-hole located as described above and the through-hole 21LD.

Since the gas diffusion layer 20 includes the communication path 23, a gas passing in the gas diffusion layer 20 can be supplied not only in a direction penetrating the gas diffusion layer 20 but also in a direction parallel to the main surface of the gas diffusion layer 20. Hence, the gas diffusivity in the gas diffusion layer 20 is improved.

The gas diffusion layer 20 of this example may be formed in a manner similar to that of the third embodiment, the modified example of the third embodiment, and the first example of the third embodiment except for the features described above.

(Fourth Example)

Fig. 8 is a view showing one example of a gas diffusion layer of a fourth example of the third embodiment.

According to a gas diffusion layer 20 of this example, in the gas diffusion layer 20 of one of the third embodiment, the modified example of the third embodiment, and the first and the third examples of the third embodiment, the communication path 23 communicates between a through-hole 21 U and a through-hole 21 D provided, respectively, in a sheet material 22U and a sheet material 22D different therefrom, each of which is adjacent to a sheet material 22 in which the communication path 23 is provided. That is, the through-hole 21U of the sheet material 22U located on the sheet material 22 in which the communication path 23 is provided and the through-hole 21 D of the sheet material 22D located thereunder communicate with each other. In addition, the through-hole 21 D and the through-hole 21 U are shifted from each other by the length of the communication path 23 in a direction parallel to the main surface of the gas diffusion layer 20.

Since the gas diffusion layer 20 includes the communication path 23, a gas passing in the gas diffusion layer 20 can be supplied not only in a direction penetrating the gas diffusion layer 20 but also in a direction parallel to the main surface of the gas diffusion layer 20. Hence, the gas diffusivity in the gas diffusion layer 20 is improved.

The gas diffusion layer 20 of this example may be formed in a manner similar to that of the third embodiment, the modified example of the third embodiment, and the first and the third examples of the third embodiment except for the features described above.

(Fourth Embodiment)

An electrochemical hydrogen pump of a fourth embodiment includes an electrolyte membrane having a pair of main surfaces, a cathode catalyst layer provided on one main surface of the electrolyte membrane, an anode catalyst layer provided on the other main surface of the electrolyte membrane, a cathode gas diffusion layer provided on the cathode catalyst layer, an anode gas diffusion layer provided on the anode catalyst layer, a first plate including a gas flow path through which an anode gas flows, a second plate including a gas flow path through which a cathode gas flows, and a voltage application device applying a voltage between the cathode catalyst layer and the anode catalyst layer. In addition, the anode gas diffusion layer includes the gas diffusion layer of one of the first embodiment, the second embodiment, the modified example of the third embodiment, and the first to the fourth examples of the third embodiment.

Accordingly, when the anode gas diffusion layer of the electrochemical hydrogen pump of this embodiment is formed by laminating sheet materials, in order to suppress the displacement between through-holes of the anode diffusion layer, a highly accurate alignment can be performed between the sheet materials. In addition, the anode gas diffusion layer can secure a rigidity which withstands the press of the electrolyte membrane at a high pressure and can also uniformly diffuse an anode gas as compared to that in the past. That is, since the anode gas diffusion layer includes communication paths, an anode gas passing in the anode gas diffusion layer from the first plate can be supplied not only in one direction but also in an arbitrary direction. Hence, layers having different arrangement patterns of the communication paths are laminated in the anode gas diffusion layer, the flow direction of the anode gas in the anode gas diffusion layer can be arbitrarily set. Accordingly, since the diffusivity of the anode gas in the anode gas diffusion layer is improved, an increase in reaction overvoltage of the electrochemical hydrogen pump can be suppressed. As a result, an increase in reaction resistance (reaction overvoltage) generated when hydrogen in the anode gas is dissociated into protons and electrons, that is, an increase in consumption electric power required for a hydrogen compression operation of the electrochemical hydrogen pump, can be suppressed as compared to that in the past.

In addition, according to an electrochemical hydrogen pump of one aspect of the present disclosure, in the electrochemical hydrogen pump of the above fourth embodiment, the communication path may communicate between a through-hole of the sheet material located above a vertical line to the gas flow path of the first plate and a through-hole of the sheet material located above a vertical line to a portion of the first plate in which no gas flow path is provided.

By the structure as described above, since a gas flowing through the through-hole of the sheet material located above the vertical line to the gas flow path is allowed to flow into the through-hole of the sheet material located above the vertical line to the portion of the first plate in which no gas flow path is provided through the communication path, the uniformity of the gas diffusion is improved.

[Device Structure]

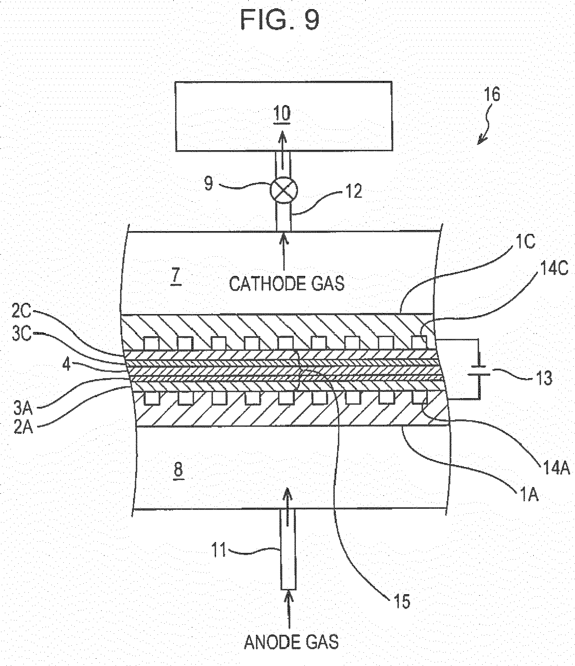

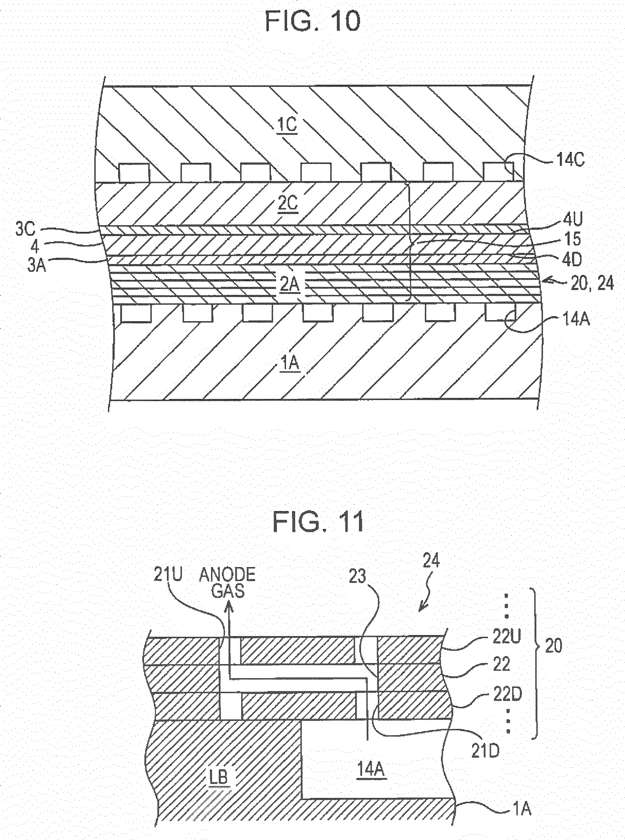

Figs. 9 and 10 are views each showing one example of an electrochemical hydrogen pump of the fourth embodiment.

An electrochemical hydrogen pump 16 includes an electrolyte membrane 4, a cathode catalyst layer 3C, an anode catalyst layer 3A, a cathode gas diffusion layer 2C, an anode gas diffusion layer 2A, a first plate 1A, a second plate 1C, and a voltage application device 13.

As shown in Fig. 10, the electrolyte membrane 4 has a pair of main surfaces 4U and 4D. The one main surface 4U of the electrolyte membrane 4 is an upper surface (front surface), and the other main surface 4D of the electrolyte membrane 4 is a lower surface (rear surface).

The electrolyte membrane 4 is a proton conductive high molecular weight membrane capable of transmitting protons ($H^+$). Any membrane may be used for the electrolyte membrane 4 as long as being a proton conductive high molecular weight membrane. For example, as the electrolyte membrane 4, a fluorinated high molecular weight electrolyte membrane may be mentioned. In particular, for example, Nafion (registered trade name, manufactured by E.I. du Pont) or Aciplex (trade name, manufactured by Asahi Kasei Corporation) may be used.

The cathode catalyst layer 3C is provided on the one main surface 4U of the electrolyte membrane 4. The cathode catalyst layer 3C contains, for example, platinum as a catalyst metal but is not limited thereto.

The anode catalyst layer 3A is provided on the other main surface 4D of the electrolyte membrane 4. The anode catalyst layer 3A contains, for example, $RuIrFeO_x$ as a catalyst metal but is not limited thereto.

In addition, as a catalyst preparation method for the cathode catalyst layer 3C and the anode catalyst layer 3A, various methods may be mentioned and are not particularly limited. For example, as a carrier of the catalyst, an electrically conductive porous substance powder or a carbon-based powder may be mentioned. As the carbon-based powder, for example, a powder of graphite, carbon black, active carbon having an electrically conductivity, or the like may be mentioned. A method for supporting a catalyst metal, such as platinum, on a carrier of carbon or the like is not particularly limited. For example, a method, such as a powder mixing or liquid phase mixing, may be used. As the latter liquid phase mixing, for example, there may be mentioned a method in which a carrier, such as carbon, is dispersed in a catalyst component colloid solution so that the catalyst component is adsorbed on the carrier. In addition, an active-oxygen removing material is used as a carrier if necessary, and a catalyst metal, such as platinum, can be supported thereon by a method similar to that described above. The supporting state of the catalyst metal, such as platinum, on the carrier is not particularly limited. For example, after being formed into fine particles, the catalyst metal may be highly dispersedly supported on the carrier.

The cathode gas diffusion layer 2C is provided on the cathode catalyst layer 3C. In addition, the cathode gas diffusion layer 2C may be a single sheet instead of a laminate formed of a plurality of sheets as is the following anode gas diffusion layer 2A. As the cathode gas diffusion layer 2C, for example, there may be used a sheet-shaped layer of high modulus graphitized carbon fibers or a porous body formed by performing platinum plating on the surface of a titanium powder sintered body. In addition, in the case in which the above graphitized carbon fibers are used, when carbon fibers are heat-treated, for example, at 2,000°C or more, graphite crystals are grown, so that graphite fibers are obtained.

The anode gas diffusion layer 2A is provided on the anode catalyst layer 3A. The anode gas diffusion layer 2A is required to have a rigidity which withstands the press of the electrolyte membrane 4 at a high pressure. Any material may be used as the anode gas diffusion layer 2A as long as having a rigidity which withstands the press of the electrolyte membrane 4 at a high pressure. In this embodiment, the anode gas diffusion layer 2A includes a gas diffusion layer 20. In this gas diffusion layer 20, when sheet materials 22 of the gas diffusion layer 20 are each formed, for example, from a metal plate as described above, a rigidity which withstands the press of the electrolyte membrane 4 at a high pressure can be secured. In addition, since the gas diffusion layer 20 is similar to the gas diffusion layer 20 of one of the first embodiment, the second embodiment, the modified example of the third embodiment, and the first to the fourth examples of the first embodiment, detailed description will be omitted.

As described above, an MEA 15 includes the electrolyte membrane 4, the cathode catalyst layer 3C and the anode catalyst layer 3A provided on the main surfaces 4U and 4D of the electrolyte membrane 4, respectively, the cathode gas diffusion layer 2C provided on the upper surface of the cathode catalyst layer 3C, and the anode gas diffusion layer 2A provided on the lower surface of the anode catalyst layer 3A. In addition, those layers are bonded to each other in a laminated state.

In the first plate 1A (separator plate), a gas flow path 14A through which an anode gas flows is provided. That is, the first plate 1A is a member supplying an anode gas to the anode gas diffusion layer 2A. In particular, in a plan view of the first plate 1A, for example, a serpentine-shaped gas flow path 14A communicating with a manifold not shown is formed, and a region in which this gas flow path 14A is formed is disposed so as to be in contact with the lower surface of the anode gas diffusion layer 2A.

In addition, when being dried, the electrolyte membrane 4 is liable to be broken besides an increase in membrane resistance (IR loss) and an increase in reaction resistance (reaction overvoltage) by dissociation of hydrogen into protons and electrons, and hence, the anode gas contains at least a hydrogen gas and water molecules (water steam). As the anode gas, for example, there may be mentioned a reformed gas containing hydrogen or a hydrogen-containing gas generated by water electrolysis.

In the second plate 1C (separator plate), a gas flow path 14C through which a cathode gas flows is provided. That is, in the gas flow path 14C of the second plate 1C, a cathode gas flows from the cathode gas diffusion layer 2C. In particular, in a plan view of the second plate 1C, for example, a serpentine-shaped gas flow path 14C communicating with a manifold not shown is formed, and a region in which this gas flow path 14C is formed is disposed so as to be in contact with the upper surface of the cathode gas diffusion layer 2C. As the cathode gas, for example, a high purity hydrogen gas may be mentioned.

In addition, since the lower and the upper surfaces of the MEA 15 are sandwiched with the first plate 1A and the second plate 1C, respectively, a single cell of the electrochemical hydrogen pump 16 is obtained.

The voltage application device 13 applies a voltage between the cathode catalyst layer 3C and the anode catalyst layer 3A. In particular, a plus terminal of the voltage application device 13 is connected to the electrically conductive first plate 1A, and a minus terminal of the voltage application device 13 is connected to the electrically conductive second plate 1C. The voltage application device 13 may have any structure as long as a voltage can be applied between the cathode catalyst layer 3C and the anode catalyst layer 3A.

In this case, the cathode gas diffusion layer 2C and the anode gas diffusion layer 2A are electricity feeding bodies of the cathode and the anode of the MEA 15. That is, the cathode gas diffusion layer 2C functions to feed electricity between the second plate 1C and the cathode catalyst layer 3C, and the anode gas diffusion layer 2A functions to feed electricity between the first plate 1A and the anode catalyst layer 3A.

In addition, the cathode gas diffusion layer 2C also functions to diffuse a gas between the gas flow path 14C of the second plate 1C and the cathode catalyst layer 3C, and the anode gas diffusion layer 2A also functions to diffuse a gas between the gas flow path 14A of the first plate 1A and the anode catalyst layer 3A. For example, the anode gas flowing through the gas flow path 14A of the first plate 1A diffuses to the surface of the anode catalyst layer 3A through the anode gas diffusion layer 2A.

In addition, if necessary, a cooling device is provided for the single cell of the electrochemical hydrogen pump 16, and by laminating at least two cells, a stack structure may be formed from a plurality of single cells.

As shown in Fig. 9, the electrochemical hydrogen pump 16 includes an anode chamber 8 and a cathode chamber 7.

The inside of the anode chamber 8 communicates with an anode inlet pipe 11 and also communicates with the gas flow path 14A of the first plate 1A through a fluid flow path not shown (such as a pipe or a manifold). Accordingly, the anode gas flowing into the anode chamber 8 through the anode inlet pipe 11 is supplied to the gas flow path 14A of the first plate 1 A.

The inside of the cathode chamber 7 communicates with a cathode outlet pipe 12 and also communicates with the gas flow path 14C of the second plate 1C through a fluid flow path not shown (such as a pipe or a manifold). Accordingly, after flowing into the cathode chamber 7 through the gas flow path 14C of the second plate 1C, the cathode gas (hydrogen gas) passing through the MEA 15 is then supplied to the cathode outlet pipe 12. In addition, an on-off valve 9 (such as an electromagnetic valve) is provided for the cathode outlet pipe 12, and since the on-off valve 9 is appropriately opened or closed, the cathode gas is stored in a high pressure hydrogen tank 10. Accordingly, the cathode gas as described above is used, for example, as a fuel of a hydrogen-using apparatus (such as a fuel cell vehicle).

Accordingly, in the anode gas diffusion layer 2A of this embodiment, when the sheet materials 22 are laminated to each other, in order to suppress the displacement between the through-holes 21 of the anode gas diffusion layer 2A, the sheet materials 22 can be aligned with each other at a high accuracy. In addition, the anode gas diffusion layer 2A can secure a rigidity which withstands the press of the electrolyte membrane 4 at a high pressure and can also uniformly diffuse an anode gas as compared to that in the past. That is, since the anode gas diffusion layer 2A includes the communication paths 23, the anode gas passing through the anode gas diffusion layer 2A from the first plate 1A can be supplied not only in one direction but also in an arbitrary direction. Hence, when layers having different arrangement patterns of the communication paths 23 are laminated in the anode gas diffusion layer 2A, the direction of the gas flow in the anode gas diffusion layer 2A can be arbitrarily set. As a result, since the diffusivity of the anode gas in the anode gas diffusion layer 2A is improved, the increase in reaction overvoltage of the electrochemical hydrogen pump 16 can be suppressed. Accordingly, the increase in reaction resistance (reaction overvoltage) generated when hydrogen in the anode gas is dissociated into protons and electrons, that is, the increase in consumption electric power required for a hydrogen compression operation of the electrochemical hydrogen pump 16, can be suppressed as compared to that in the past.

[Operation]

Hereinafter, an operation of the electrochemical hydrogen pump of the embodiment will be described with reference to Figs. 9 and 10. In addition, the following operation may be partially or fully performed by a control program of a controller not shown in the figure. Any controller may be used as long as having a control function. The controller includes, for example, a computing circuit and a storage circuit storing a control program. As the computing circuit, for example, an MPU and/or a CPU may be mentioned. As the storage circuit, for example, a memory may be mentioned. The controller may be formed of a single controller performing a centralized control or may be formed of a plurality of controllers performing a decentralized control in cooperation with each other.

First, by the voltage application device 13, a voltage is applied between the anode and the cathode of the MEA 15.

Next, when the anode gas is supplied into the anode chamber 8 through the anode inlet pipe 11, electrons are dissociated from hydrogen in the anode gas on the anode, so that protons (H$^+$) are generated (Formula (1)). The electrons thus dissociated are transferred to the cathode through the voltage application device 13.

On the other hand, protons pass through the electrolyte membrane 4 together with water molecules and are brought into contact with the cathode. On the cathode, a reduction reaction is performed by the protons passing through the electrolyte membrane 4 and electrons from the cathode gas diffusion layer 2C, so that the cathode gas (hydrogen gas) is generated (Formula (2)).

Accordingly, gas purification of an anode gas containing impurities, such as a $CO_2$ gas, can be performed at a high efficiency. That is, the impurities, such as a $CO_2$ gas, are removed by the MEA 15. In addition, the anode gas may contain a CO gas as an impurity in some cases. In this case, since a CO gas degrades the catalyst activity of the anode catalyst layer 3A and the like, a CO gas is preferably removed by a CO remover not shown in the figure (such as a modifier or a CO selective oxidizer).

In addition, when the on-off valve 9 is closed, the pressure of the cathode gas in the cathode chamber 7 is increased, and the gas pressure of the cathode becomes high. In particular, the relationship among a gas pressure P1 of the anode, a gas pressure P2 of the cathode, and a voltage E of the voltage application device 13 can be shown by the following formula (3).

Anode:

$$H_2 \text{ (low pressure)} \rightarrow 2H^+ + 2e \qquad (1)$$

Cathode:

$$2H^+ + 2e^- \rightarrow H_2 \text{ (high pressure)} \qquad (2)$$

$$E=(RT/2F)\ln(P2/P1) + ir \qquad (3)$$

In the formula (3), R represents the gas constant (8.3145J/Kmol), T represents a temperature (K) of the MEA 15, F represents Faraday's constant (96,485 C/mol), P2 represents the gas pressure of the cathode, P1 represents the gas pressure of the anode, i represents the current density (A/cm$^2$), and r represents a cell resistance ($\Omega \cdot$cm$^2$).

From the formula (3), it is easily understood that by an increase in voltage E of the voltage application device 13, the gas pressure P2 of the cathode can be increased.

Accordingly, in the electrochemical hydrogen pump 16 of this embodiment, when the on-off valve 9 is closed, and the voltage E of the voltage application device 13 is increased, the cathode gas pressure in the cathode chamber 7 is increased. In addition, when the cathode gas pressure reaches a predetermined pressure or more, the on-off valve 9 is opened, so that the cathode gas in the cathode chamber 7 is filled in the high pressure hydrogen tank 10 through the cathode outlet pipe 12. On the other hand, when the cathode gas pressure in the cathode chamber 7 reaches less than the predetermined pressure, the on-off valve 9 is closed, so that the cathode chamber 7 and the high pressure hydrogen tank 10 are disconnected to each other. Hence, the cathode gas in the high pressure hydrogen tank 10 is suppressed from flowing back to the cathode chamber 7.

As described above, by the electrochemical hydrogen pump 16, the cathode gas (hydrogen gas) is pressurized to a desired target pressure and is filled in the high pressure hydrogen tank 10.

(Example)

Fig. 11 is a view showing one example of the gas diffusion layer of the electrochemical hydrogen pump of an example of the fourth embodiment.

According to an electrochemical hydrogen pump 16 of this example, in the electrochemical hydrogen pump 16 of the fourth embodiment, a communication path 23 communicates between a through-hole 21 D of a gas diffusion layer 20 located above a vertical line to a gas flow path 14A of a first plate 1A and a through-hole 21 U of a gas diffusion layer 20 located above a vertical line to a portion (hereinafter, referred to as the "lib LB") at which the gas flow path 14A of the first plate 1A is not provided. In addition, the through-hole 21 D and the through-hole 21 U are shifted from each other by the length of the communication path 23 in a direction parallel to the main surface of the gas diffusion layer 20.

In this example, the structure is formed so that an anode gas is allowed to flow into the through-hole 21 D of the gas diffusion layer 20 through the gas flow path 14A of the first plate 1A. Hence, when the communication path described above is not formed in the gas diffusion layer 20, the anode gas is not allowed to flow through the through-hole 21 U of the gas diffusion layer 20 located above the vertical line to the lib LB in which the gas flow path 14A of the first plate 1A is not provided, and the diffusion of the anode gas in the gas diffusion layer 20 may be non-uniformed in some cases.

For example, when the lateral dimension of the lib LB of the first plate 1A is approximately several hundreds of micrometers (such as approximately 500 $\mu$m), in order to prevent the fracture of the electrolyte membrane 4 by a high pressure, the through-holes 21 D and 21 U are each required to have a diameter of approximately several tens of micrometers (such as approximately 50 $\mu$m). In this case, when the communication path is not provided in the gas diffusion layer 20, the anode gas is not allowed to flow through the through-hole 21 U located above the vertical line to the lib LB.

Hence, in this example, by the structure described above, since the anode gas is also allowed to flow into the through-hole 21 U of the gas diffusion layer 20 through the communication path 23 of the gas diffusion layer 20, the diffusion of the anode gas is suppressed from being non-uniformed.

The electrochemical hydrogen pump 16 of this example may be formed in a manner similar to that of the electrochemical hydrogen pump 16 of the fourth embodiment except for the features described above. In addition, the shapes and the dimensions of the through-holes 21 and the lib LB are shown by way of example and are not limited to those of this example.

In addition, as long as not conflicted with each other, the first embodiment, the second embodiment, the third embodiment, the modified example of the third embodiment, the first to the fourth examples of the third embodiment, the fourth embodiment, and the example of the fourth embodiment may be performed in combination.

In addition, from the above description, it is apparent to a person skilled in the art that many improvements of the present disclosure and other embodiments thereof are to be performed. Hence, it is to be understood that the above description has been described by way of example in order to suggest the best mode of carrying out the present disclosure to a person skilled in the art. In addition, the structures and/or the functions disclosed in the present disclosure can be modified and changed without departing from the sprit and the scope thereof.

According to one aspect of the present disclosure, for example, a gas diffusion layer can be obtained in which a manifold hole supplying a gas to a gas diffusion portion is provided in each sheet material. Hence, the one aspect of the present disclosure may be applied, for example, to an electrochemical hydrogen pump.

**Claims**

1. A gas diffusion layer comprising:

   sheet materials laminated to each other and each including a gas diffusion portion in which through-holes are provided to allow a gas to pass therethrough, and at least one manifold hole which is provided in a region other than that of the gas diffusion portion and through which the gas passes.

**2.** The gas diffusion layer according to Claim 1,
wherein the sheet materials further include a sealing portion provided in a region not surrounding the manifold hole and outside the gas diffusion portion and at least one alignment portion which aligns adjacent sheet materials with each other, and
the at least one alignment portion is provided outside the sealing portion.

**3.** The gas diffusion layer according to Claim 2, wherein the at least one alignment portion is provided between the sealing portion and the manifold hole.

**4.** The gas diffusion layer according to Claim 3, wherein the at least one alignment portion is provided at a side closer to the sealing portion than to the manifold hole.

**5.** The gas diffusion layer according to Claim 4, wherein the at least one alignment portion is provided around the periphery of the sealing portion.

**6.** The gas diffusion layer according to any one of Claims 2 to 5, wherein the number of the at least one alignment portion is two or more, and the alignment portions are provided at positions which face each other with the gas diffusion portion interposed therebetween.

**7.** The gas diffusion layer according to any one of Claims 1 to 6, wherein at least one of the sheet materials includes at least one communication path communicating between the through-holes.

**8.** The gas diffusion layer according to Claim 7, wherein one of the sheet materials which are located most outside has a small number of the communication paths as compared to that of each of the other sheet materials.

**9.** The gas diffusion layer according to any one of Claims 1 to 8, wherein the sheet materials which are adjacent to each other are adhered to each other.

**10.** The gas diffusion layer according to Claim 7 or 8, wherein the communication path communicates between through-holes provided in the same sheet material adjacent to the sheet material in which the communication path is provided.

**11.** The gas diffusion layer according to any one of Claims 7, 8 and 10, wherein the communication path communicates between through-holes provided in different sheet materials each adjacent to the sheet material in which the communication path is provided.

**12.** An electrochemical hydrogen pump comprising:

an electrolyte membrane having a pair of main surfaces;
a cathode catalyst layer provided on one main surface of the electrolyte membrane;
an anode catalyst layer provided on the other main surface of the electrolyte membrane;
a cathode gas diffusion layer provided on the cathode catalyst layer;
an anode gas diffusion layer provided on the anode catalyst layer;
a first plate including a gas flow path through which an anode gas flows;
a second plate including a gas flow path through which a cathode gas flows; and
a voltage application device applying a voltage between the cathode catalyst layer and the anode catalyst layer, wherein the anode gas diffusion layer is the gas diffusion layer according to any one of Claims 1 to 11.

**13.** The electrochemical hydrogen pump according to Claim 12, wherein the communication path communicates between a through-hole of the sheet materials located above a vertical line to the gas flow path of the first plate and a through-hole of the sheet materials located above a vertical line to a portion at which no gas flow path of the first plate is provided.

# FIG. 1

## FIG. 2A

## FIG. 2B

## FIG. 3A

## FIG. 3B

FIG. 4A

FIG. 4B

FIG. 5A

21A

24A

FIG. 5B

S   PB          23B   21B

24B

S   PB

FIG. 5C

L   PC   23C   21C

24C

FIG. 6

FIG. 7

FIG. 8

# FIG. 9

## FIG. 10

## FIG. 11

FIG. 12

Europäisches
Patentamt

European
Patent Office

Office européen
des brevets

# EUROPEAN SEARCH REPORT

Application Number

EP 17 18 5043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 171 719 B1 (ROY ROBERT J [US] ET AL) 9 January 2001 (2001-01-09) | 1-11 | INV.<br>H01M8/0662 |
| Y | * column 1, line 22 - column 2, line 50 *<br>* column 4, line 57 - column 9, line 12; figures 1-4 * | 12,13 | B01D53/32<br>H01M8/242<br>H01M8/023<br>H01M8/0245 |
| X | JP 2008 235060 A (NIPPON TELEGRAPH & TELEPHONE; NHK SPRING CO LTD) 2 October 2008 (2008-10-02) | 1,7-11 | H01M8/0271<br>H01M8/04089 |
| Y | * paragraph [0016] - paragraph [0038]; figures 2-4 * | 12,13 | |
| X | EP 3 041 075 A1 (SUMITOMO PRECISION PROD CO [JP]) 6 July 2016 (2016-07-06) | 1,7-11 | |
| Y | * paragraph [0035] - paragraph [0068]; figures 5-11 * | 12,13 | |
| Y | GRIGORIEV S A ET AL: "Description and characterization of an electrochemical hydrogen compressor/concentrator based on solid polymer electrolyte technology", INTERNATIONAL JOURNAL OF HYDROGEN ENERGY, ELSEVIER SCIENCE PUBLISHERS B.V., BARKING, GB, vol. 36, no. 6, 14 August 2010 (2010-08-14), pages 4148-4155, XP028172870, ISSN: 0360-3199, DOI: 10.1016/J.IJHYDENE.2010.07.012 [retrieved on 2010-07-16] * page 4148 - page 4151 * | 12,13 | TECHNICAL FIELDS SEARCHED (IPC)<br><br>H01M<br>B01D |
| Y | WO 03/075379 A2 (CA NAT RESEARCH COUNCIL [CA]; WONG TERRANCE Y H [CA]; GIRARD FRANCOIS) 12 September 2003 (2003-09-12) * column 2, lines 17-25 * * column 10, line 29 - column 16, line 31; figures 3-6 * | 12,13 | |

The present search report has been drawn up for all claims

| Place of search | Date of completion of the search | Examiner |
|---|---|---|
| The Hague | 5 February 2018 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 5043

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2018

| Patent document cited in search report | | Publication date | Patent family member(s) | | Publication date |
|---|---|---|---|---|---|
| US 6171719 | B1 | 09-01-2001 | DE | 69710218 D1 | 14-03-2002 |
| | | | DE | 69710218 T2 | 25-07-2002 |
| | | | DE | 69736864 T2 | 06-09-2007 |
| | | | EP | 0947020 A1 | 06-10-1999 |
| | | | EP | 1154506 A1 | 14-11-2001 |
| | | | JP | 4347417 B2 | 21-10-2009 |
| | | | JP | 4347902 B2 | 21-10-2009 |
| | | | JP | 2002514343 A | 14-05-2002 |
| | | | JP | 2009079296 A | 16-04-2009 |
| | | | US | 6171719 B1 | 09-01-2001 |
| | | | WO | 9824136 A1 | 04-06-1998 |
| JP 2008235060 | A | 02-10-2008 | NONE | | |
| EP 3041075 | A1 | 06-07-2016 | CN | 105474443 A | 06-04-2016 |
| | | | EP | 3041075 A1 | 06-07-2016 |
| | | | JP | 6228984 B2 | 08-11-2017 |
| | | | JP | WO2015029353 A1 | 02-03-2017 |
| | | | US | 2016204452 A1 | 14-07-2016 |
| | | | WO | 2015029353 A1 | 05-03-2015 |
| WO 03075379 | A2 | 12-09-2003 | AU | 2003208221 A1 | 16-09-2003 |
| | | | US | 2004211679 A1 | 28-10-2004 |
| | | | WO | 03075379 A2 | 12-09-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4733380 B